# EUROPEAN PATENT SPECIFICATION

(11) **EP 1 437 056 B1**
(45) Date of publication and mention of the grant of the patent: **17.06.2009**
(21) Application number: 03078685.9
(22) Date of filing: 21.11.2003
(51) Int. Cl.: A41D 19/015

(54) **Night-time glove**
Handschuh für die Nacht
Gant pour la nuit

(30) Priority: 13.01.2003 CA 416101
(43) Date of publication of application: 14.07.2004
(73) Proprietor: SUPERLUMINAL GOVE-TECH Ltd., Prince Edward Island C1B 2G2 (CA)
(72) Inventor: SUPERLUMINAL GOVE-TECH Ltd., Prince Edward Island C1B 2G2 (CA)
(74) Representative: Baker, Karen Veronica

(56) References cited:
- DE-A- 19 952 430
- DE-U- 29 913 096
- FR-A- 2 810 722
- GB-A- 2 107 571
- US-A- 3 638 011
- US-A- 5 386 489
- PATENT ABSTRACTS OF JAPAN vol. 2000, no. 08, 6 October 2000 (2000-10-06) & JP 2000 129517 A (NTT ME CORP;NICHIMEN CORP), 9 May 2000 (2000-05-09)

## Description

### FIELD OF THE INVENTION

This invention pertains to illuminated gloves and more particularly, it pertains to self-contained fibre-optic arrangements mounted inside illuminated gloves.

### BACKGROUND OF THE INVENTION

It is believed that the earliest models of illuminated gloves were used by trainmen to signal train conductors. In the early days of the automobile, illuminated gloves were also used by operators to indicate an intention to slow down or to change direction. More recently, surgical gloves with a finger-mounted light were developed to aid surgeons performing delicate surgical operations.

Although illuminated gloves are very practical apparels, their amusement character makes them particularly suitable for use as toys. This amusement character is kept at its best when the illumination system is well dissimulated inside the glove and its lighting produces an effect of surprise. Basically, this is one of the objectives of the present invention.

In regard to the prior art in this field, the following documents represent a good inventory of the illuminated gloves preceding the present invention. These documents are divided in three groups as follows.

The illuminated gloves in the first group have electrical wiring therein with light bulbs mounted at various places on the glove. A switch is provided and is usually operable by the thumb and the index finger. A battery is mounted in the wrist pad of the glove. Examples of the illuminated gloves in this first group are available in the following US Patents.
US 1,199,710 issued on Sept. 26, 1916 to W. J. Newton;
US 1,215,389 issued on Feb. 13, 1917 to F. E. Lauray;
US 1,230,943 issued on Jun. 26, 1917 to A. Sundh;
US 3,638,011 issued on Jan. 25, 1972 to M. H. Bain et al.;
US 5,177,467 issued on Jan. 5, 1993 to T. Chung-Piao;
US 5,580,154 issued on Dec. 3, 1996 to J. D. Coulter et al.;
US 6,006,357 issued on Dec. 28, 1999 to J. E. Mead;

Some of the illuminated gloves of the prior art have an optical fibre mounted along one finger thereof with a light source at the tip of that finger, such as the surgeon glove mentioned above. Examples of these gloves are available in the following documents
US 5,086,378 issued on Feb. 4, 1992 to M. W. Prince;
US 5,283,722 issued on Feb. 1, 1994 to H. P. Koenen et al.;
US 5,535,105 issued on July 9, 1996 to H. P. Koenen Myers et al.;
US 5,816,676 issued on Oct. 6, 1998 to H. P. Koenen Myers et al.;

The prior art documents also disclose another type of illuminated glove having a single light circle mounted on the back-of-the-hand portion. The light circle is made of a plurality of optical fibers originating from a single light source inside the cuff of the glove. This type of glove is illustrated and described in the US 5,424,922 issued on June 13, 1995 to J.S. Wise;

Finally, another illuminated glove of the prior art is illustrated and described in the French Patent Application 2,810,722, filed by Jeremy Kleinberg on June 26, 2000, and published on December 28, 2001. The glove described in this document has an electrical circuit incorporated therein with a battery which appear to be mounted in a pocket on the backside on the glove, a diode on the tip of each finder, a switch on the inside of the thumb, and wires which appear to extend loosely inside the glove, in a serial circuit extending from the battery to the switch and to each diode. Although the document suggests that the diodes can be replaced by light beams of optic fibers, there is no suggestion therein concerning the arrangement of the optic fibers inside the glove to ensure flexibility of the glove.

Although several solutions have been proposed in the past to illuminate a glove, it is believed that there is still a market demand for an illuminated glove which has the flexibility, feeling and appearance of an ordinary glove when the illumination system is not used. There is also a market need for a glove illumination system that is more appropriate for dissimulation inside amusement gloves for youths.

### SUMMARY OF THE INVENTION

In the present invention, there is provided an illuminated glove in which is incorporated a fibre-optic arrangement. This fibre-optic arrangement is thin and flexible over the back-of-the-hand portion and the hand-knuckle region of the glove. The fibre-optic arrangement has extensible sections therein for reducing flexion stiffness and fibre tension. The glove according to the present invention has the appearance of an ordinary glove when the illumination feature is unlit. In use, it has the feeling, flexibility and endurance of an ordinary glove. The mystical aspect of this glove when lit in the dark is thereby undiminished.

in accordance with one aspect of the present invention, there is provided glove that has an inside lining; art outside layer; a wrist band; a plurality of fingers and a thumb; a back-of-the-hand portion extending from the wrist band toward the fingers and the thumb; and a hand-knuckle region extending between the back-of-the-hand portion and the fingers and the thumb. The glove also has a first opening in the outside layer on an extremity of each of the fingers and thumb, and a fibre-optic arrangement mounted therein. The fibre-optic arrangement comprises; fibre-optic ribbons extending along each of the fingers and thumb, with a portion of each ribbon being visible through one of the first openings; a plurality of optical fibres extending from the fibre-optic ribbons along the hand-knuckle region and back-of-the-hand portion to a light source said light source being mounted near the wrist band said fibre-optic arrangement being mounted between the inside lining and outside layer being characterised in that each ribbon has a top surface affixed to the outside layer; each ribbon further has a backing piece affixed thereto, and that backing piece is glued to the inside lining. Moreover, the optical fibres are loosely laid between the inside lining and the outside layer, and have slack means therein for allowing a flexion of the fingers and thumb without applying tension on the light source.

Although the plurality of optical fibres in this aspect of the invention contains five bundles with a loose bend in each one, this fibre-optic arrangement has been found to be particularly advantageous for maintaining the flexibility of the glove substantially the same as a common non-illuminated glove.

In accordance with a second illumination variant, the outside layer of the glove has openings along the top surface of each finger and the fibre-optic ribbons comprise reflective backings thereunder. The ribbons are visible through the top openings, to produce a finger-top illumination.

In accordance with a third illumination variant, the outside layer has openings over the back-of-the-hand portion of the glove, and the fibre-optic arrangement has a reflective backing over the back-of-the-hand region such that the plurality of optical fibres are visible through these back-of-the-hand openings to produce a back-of-the-hand illumination pattern. Preferably this pattern defines the logo of a sport team, or a symbol representing the character of a story book or the hero of a futuristic movie, in order to enhance the amusing aspect of the glove.

Still another feature of the illuminated glove of the present invention is that it is susceptible of a low cost of manufacture with regard to both materials and labour, and which accordingly is then susceptible of low price of sale to the consumer, thereby making such glove economically available to the public.

Other advantages and novel features of the present invention will become apparent from the following detailed description of the preferred embodiment.

### BRIEF DESCRIPTION OF THE DRAWINGS

One embodiment of the present invention is illustrated with three options or variants in the accompanying drawings, in which like numerals denote like parts throughout the several views, and in which:
- **FIG. 1**: is a perspective view of the illuminated glove according to the present invention, showing the finger-end illumination variant;
- **FIG. 2**: is a top view of the illuminated glove, with the fibre-optic arrangement being shown in dash lines;
- **FIG. 3**: is a top view of the fibre-optic arrangement mounted inside the illuminated glove, with the glove being shown in dash lines;
- **FIG. 4**: is a partial cross-section side view of one finger of the illuminated glove;
- **FIG. 5**: is an enlarged view of a finger tip in the fibre-optic arrangement in a region indicated by detail **circle 5** in **FIG. 2**, basically;
- **FIG. 6**: is an enlarged cross-section side view of a finger tip, as seen in the detail **circle 6**, in **FIG. 4**;
- **FIG. 7**: is a cross-section side view of the light source comprised in the preferred fibre-optic arrangement;
- **FIG. 8**: is a perspective view of the illuminated glove showing in combination the finger-end illumination variant, the finger-top illumination variant and the hand-top illumination variant;
- **FIG. 9**: is a circuit diagram of the power and light source mounted in the cuff and over the base of the thumb in the preferred illuminated glove.

### DESCRIPTION OF THE PREFERRED EMBODIMENT

While this invention is susceptible of embodiment in many different forms, there is shown in the drawings and will be described in details herein one specific embodiment and three illumination variants, with the understanding that the present disclosure is to be considered as an example of the principles of the invention and is not intended to limit the invention to the embodiment illustrated and described.

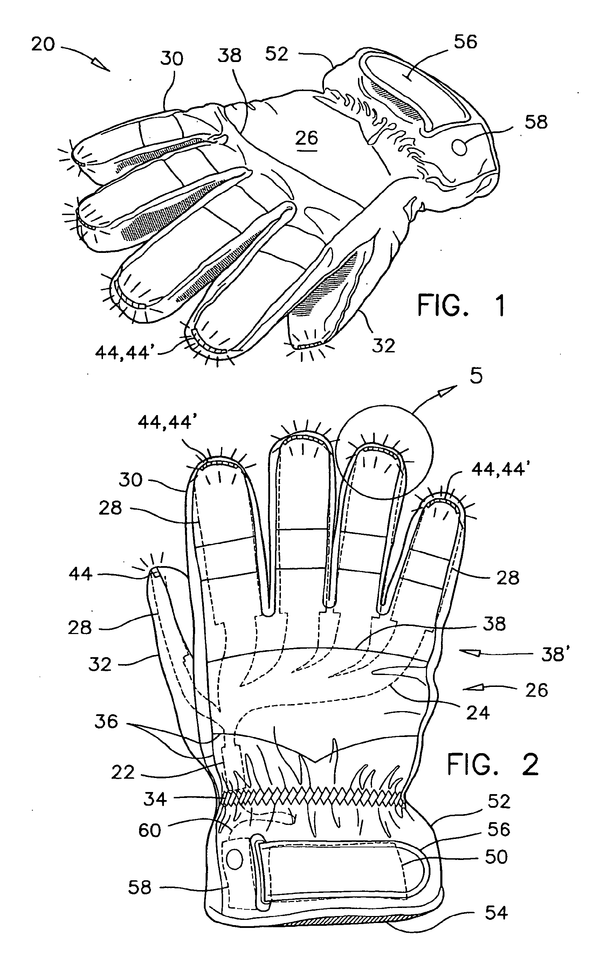

Referring to the **FIGS. 1, 2** and **3**, the illuminated glove **20** has the appearance of an ordinary glove. A fibre-optic arrangement is mounted therein and is made of a plurality of thin optical fibres originating from a common light source **22**. The optical fibres extend from the light source **22** into five offset bundles **24** over the back-of-the-hand portion **26** of the glove. The offset bundles **24** extends to form five ribbons **28** lining the top portion **30'** of each finger **30** and the thumb **32.**

In the preferred fibre-optic arrangement, the light source **22** is held over the base of the thumb **32**, near the elastic wrist band **34** of the glove. The light source **22** is a cylindrical element which is held substantially parallel with the axis of the index finger of the glove. The light source **22** is retained in its position and orientation, between the inside lining and outside layer of the glove, and between nearby stitches **36** and the wrist band **34**, or otherwise.

The word "offset" is used herein because each bundle **24** describes an offset in the optical fibres between and relative to the alignment of the light source **22** and the respective finger and thumb **30, 32**. It will be appreciated that this offset provides a slack means to eliminate any tension on the light source **22**, or any stiffness in the back-of-the-hand portion of the glove when the fingers of the glove are flexed. It will also be appreciated that another loose bend or undulation in the alignment of the optical fibres would constitute an equivalent arrangement to provide substantially the same result.

In this preferred embodiment, each offset bundle **24** extends loosely between the inside lining and the outside layer of the glove over the back-of-the-hand portion **26** and especially over the hand-knuckle region of the glove, to maintain the extensibility of the glove during flexion of the wearer's hand. For reference, the hand-knuckle region of the glove extends from the base of the fingers **30** to a region on the back-of-the-hand portion **26** slightly overlapping the seam **38** of the glove. The optical fibres **40** in each offset bundle **24** are laid loosely over the hand-knuckle region **38'** and the back-of-the-hand portion **26**, such that they can move laterally independently from each other, and longitudinally in unison with each other during the flexion of the hand or the fingers of the glove user.

Each ribbon **28** consists of a plurality of optical fibres **40** laid side by side on an adhesive backing **42**. Each ribbon **28** extends the full length of each finger **30** and the thumb **32**. In the first illumination variant, the end **44** of each ribbon protrudes through an opening **44'** in the outside layer of the glove and defines an illuminated arc at the end of the respective finger **30** and thumb **32**, as illustrated in **FIGS. 1** and **2**.

A power source **50** containing a battery and a control circuit is mounted inside the cuff **52** of the glove, in a compartment which is accessible from an opening **54** along the rim of the cuff **52**. The battery and the control circuit **50** are contained in a flexible package such that the malleability of the cuff and the usability of the adjustable strap **56** on that cuff are substantially maintained.

A switch module **58** is mounted on the inside segment of the cuff near the light source **22**. The switch **58** is connected between the control circuit **50** and the light source **22**. The switch **58** is a pressure-sensitive switch which can be turned on or off by the pressure of the finger, or of the chin of the user for example.

In the preferred embodiment, the individual fibres **40** are two hundred and fifty (250) micron in diameter, and each ribbon **28** contains sixty (60) fibres laid side by side over the adhesive backing **42**. It has been found that fibres of that size loosely laid, are substantially impalpable over the hand-knuckle region and the back-of-the-hand portion of the glove. It has been found that the layout of optical fibres **40** over the back-of-the-hand portion **26** and the hand-knuckle region **38**, with the above fibre specifications, causes the fibre-optic arrangement to be so malleable that it is almost imperceptible during the movement of the hand.

In order to further maintain the flexibility of the glove, an extensible wiring bend **60** is provided between the light source **22** and the switch module **58**. The wiring bend **60** extends under the elastic wrist band **34** of the glove. This wiring bend **60** is advantageous for preventing the application of any tension between the switch module **58** and the light source **22**, especially when the elastic light band **34** is stretched out, such as when the glove is being put on or taken off.

The control circuit **50** may also comprise a connector **62** to engage with a battery charger or a solar panel, for recharging the battery when used up.

This connector and the rechargeable aspect of the control circuit do not constitute the focus of the present invention, and therefore are not discussed in further details.

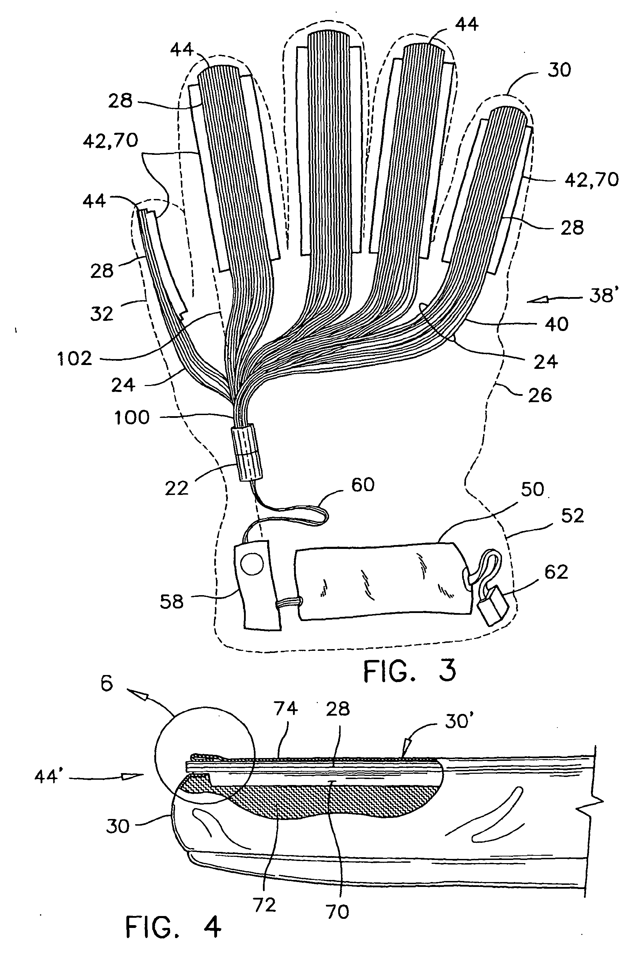

As briefly mentioned, each ribbon **28** is made of about sixty optical fibres mounted side-by-side on an adhesive backing **42**. The preferred backing **42** has wings **70** along its sides, which can be attached by stitches or otherwise to the inside lining, the outside layer or both. In the preferred embodiment, the backing **42** and the wings **70** are glued to the inside lining **72** of the glove, and the outside layer **74** of the glove is glued to the top surface of the ribbon **28**, as illustrated in **FIG. 4**.

The gluing of the ribbons **28** to the fingers of the glove is advantageous for preventing the separation of the ribbons from the fingers of the glove when the glove is being removed for example, and when tension is applied to one or more fingers. Furthermore, each ribbon **28** provides protective padding over each finger, which makes the glove appropriate for used in the performance of some sports.

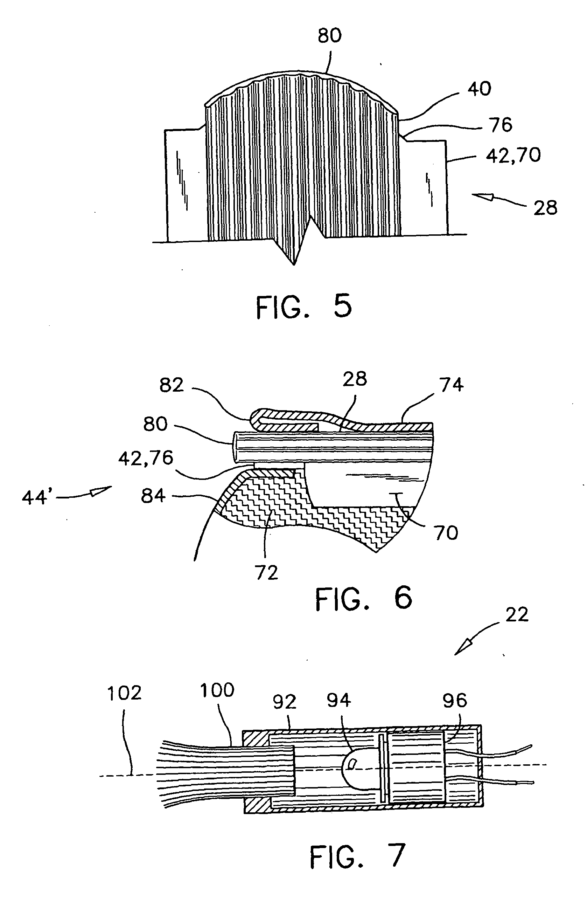

Referring now to **FIGS. 5** and **6**, the optical fibres **40** extend beyond the forward edge **76** of the adhesive backing **42**. During the manufacturing of the fibre-optic structure, the ends of the fibres **40** are melted together using a hot metal blade such that the tips of the fibres in a same ribbon **28** form an even surface **80** over the end of the ribbon **28**. This treatment removes the sharp edges and irregular surfaces on the fibre tips, and forms a substantially convex lens **80** over the end of each ribbon **28** to enhance the illumination of each finger end **44**.

Referring specifically to **FIG. 6**, the upper end segment **82** of the outside layer **74** on a finger-end opening **44'** is preferably folded over itself and glued to the top surface of the ribbon **28**. The lower segment **84** of the outside layer **74** is glued to the backing **42**. The backing **42** and the wings **70** are preferably glued to the inside lining **72**.

The light source **22** as illustrated in **FIG. 7**, consists of a light emitting diode **94** (LED) and a lead spacer **96**, mounted in a cylindrical LED reflecting housing **92**. The optical fibres **40** from the five offset bundles **24** originate from a common core **100** extending inside the LED reflecting housing **92**. This core may be glued together to form a cylindrical shape. For reference purposes, the light source has a light axis **102** extending along the longitudinal axis of the reflecting housing **92**. The reflecting housing is mounted inside the glove with the light axis **102** extending substantially parallel with the index finger of the glove as illustrated in **FIG. 3**. This placement of the light source has been found convenient for maintaining the comfort of the glove.

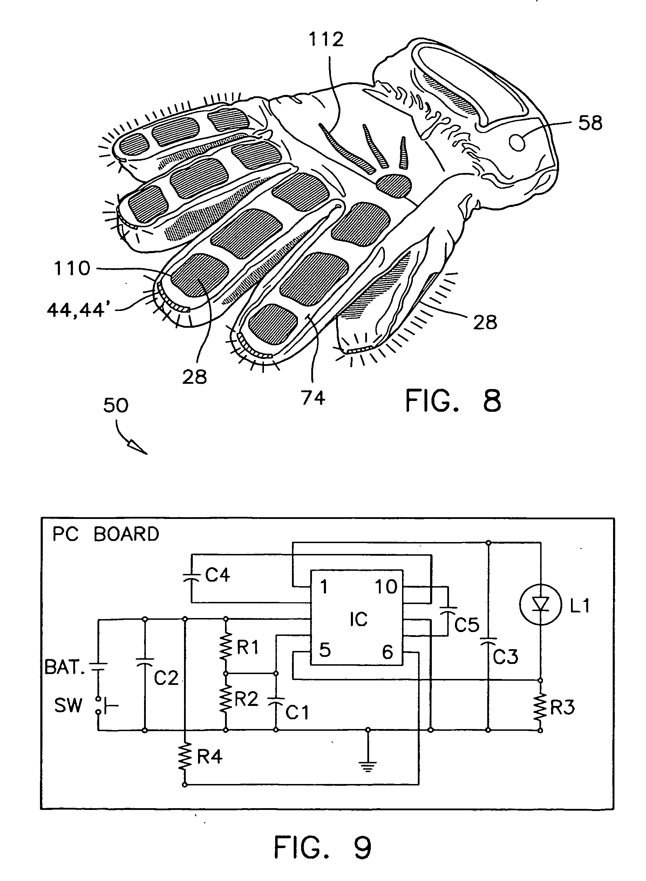

A second glove illumination variant is illustrated in **FIG. 8**. In this variant, the adhesive backing under each ribbon **28** is made of a reflective material to reflect light transversely through the fibres, and the outside layer **74** has openings **110** therein on the top of each finger and the thumb, to expose portions of these ribbons **28**, thereby providing finger-top illumination.

Other reflective backing can also be mounted under the offset bundles **24** of the fibre-optic arrangement, and other openings **112** in the outside layer of the glove can be made to provide hand-top illumination over the back-of-the-hand portion of the glove as illustrated in **FIG. 8**. This reflective backing, however, should be non-adhesive to maintain the flexibility of the offset bundles **24** over the back-of-the-hand portion and over the hand-knuckle region of the glove. Although the illustrated hand-top illumination **112** has the shape representing a star, it will be appreciated that other shapes can be used, such as the logo of a national hockey team or the initials of a children hero, for example.

In the illustration of **FIG. 8**, the finger-end illumination, the finger-top illumination and the hand-top illumination variants are illustrated together. It will be appreciated, however, that any one of these illumination variants can be used alone.

A diagram of the control circuit **50**, the switch **58** and the light source **22** is illustrated in **FIG. 9**. In this diagram, the preferred components are shown in the **Table 1** below. The suppliers shown in the table have representatives throughout the world and are well known to those skilled in the art.

**Table 1**

| Ref. | Description | Value | Part # | Suppliers |
|---|---|---|---|---|
| PC Board | PC Board | | 276-150 | Radio Shack |
| IC | LED Driver | | SP6682 | Sipex Corp. |
| L1 | White LED | | NSPW500BS | Nichia Corp. |
| SW | Push Button Switch | | 519PB-ND | Digi-Key Corp. |
| Bat. | (3) AAAA Bat | | E96BP-2 | Energizer |
| C1 | Electrolytic Capacitor | 1µf | 383-5351 | FAI Electronics |
| C2 | Electolytic Capacitor | 1µf | 383-5351 | FAI Electronics |
| C3 | Electrolytic Capacitor | 2.2 µf | 383-5375 | FAI Electronics |
| C4 | Ceramic Capacitor | 0.22 µf | 383-6542 | FAI Electronics |
| C5 | Ceramic Capacitor | 0.022 µf | 383-6521 | FAI Electronics |
| R1 | Carbon Film Resistor | 1.2KΩ | 1.2 KEBK-ND | Digi-Key Corp. |
| R2 | Carbon Film Resistor | 593 Ω | 560EBK-ND | Digi-Key Corp. |
| R3 | Carbon Film Resistor | 12Ω | 12EBK-ND | Digi-Key Corp. |
| R4 | Carbon Film Resistor | 1MΩ | 1:0MEBK-ND | Digi-Key Corp. |

It will be appreciated that other circuits are also considered to be part of the present inventive concept. These other circuits may comprise for example, a rechargeable battery circuit, a light-flashing circuit and a colour-selection circuit.

The preferred method for fabricating the fibre-optic arrangement consists of providing a light source **22**, a switch **58** and a control circuit **50** including a battery; providing connections between the control circuit, the switch and the light source; and providing a plurality of optical fibres **40**. Using five pieces of adhesive backing material **42** having the respective length of each of four fingers and a thumb, forming five bundles and laying the optical fibres in each bundle side-by-side on a respective adhesive backing to form five ribbons **28**, in which the optical fibres are retained to each other. The ends of these optical fibres should extend slightly beyond the end of the respective backing piece **42**, as illustrated in **FIGS. 3** to **6**. The other ends of the optical fibres are grouped together **100** and inserted in the light source **22**. The lengths of the optical fibres in each bundle are selected to form an offset or other loose bend between the fibre-optic ribbons and the light source when the fibre-optic arrangement is inserted inside a glove structure.

The preferred method for manufacturing the illuminated glove according to the present invention is to firstly lay the outside layer of the glove over the inside lining and sew the elastic wrist band **34** to retain the inside lining to the outside layer. Then, the light source **22**, the offset bundles **24**, the fibre-optic ribbons **28**, the switch **58** and the extensible wiring bend **60** can be inserted between the inside lining and the outside layer. The outside layer can then be sewn to close the glove and to affix it to the inside lining, thereby enclosing the fibre-optic arrangement there between. During the sewing of the outside layer, a gap or opening **44'** is left unsewn on the end of each finger and thumb. Each fibre-optic ribbon **28** is glued to the inside lining or outside layer or to both lining and layer through these openings. The openings are closed against the ribbons, and the ribbons are heat treated to form the lens **80**. A last step in the manufacturing process, consists of inserting the control circuit **50** inside the cuff of the glove and to connected it to the switch **58**.

It will be appreciated that numerous other manufacturing processes can also be used to manufacture the fibre-optic arrangement and the glove according to the present invention, and therefore, the above methods are provided herein as basic procedures from which improvements can emerge.

The market applications for the illuminated glove according to the present invention are numerous and include for examples, signal gloves for police officers, gloves for other officials writing tickets in the dark, camping gloves, evening gloves, sport gloves, and finally, amusement gloves for playing evening games or for enhancing a child's anticipation of bedtime.

As to other manner of fabrication, usage and operation of the present invention, the same should be apparent from the above description and accompanying drawings, and accordingly further discussion relative to the manner of manufacture, usage and operation of the invention would be considered repetitious and is not provided.

## Claims

1. A glove having an inside lining (72); an outside layer (74); a wrist band (34); a plurality of fingers (30) and a thumb (32); a back-of-the-hand portion (26) extending from said wrist band (34) toward said fingers (30) and said thumb (32); a hand-knuckle region (38') extending between said back-of-the-hand portion (26) and said fingers (30) and said thumb (32); a first opening (44') in said outside layer (74) on an extremity of each of said fingers (30) and said thumb (32); and a fibre-optic arrangement mounted therein; said fibre-optic arrangement comprising; fibre-optic ribbons (28) extending along each of said fingers (30) and said thumb (32), with a portion thereof being visible through said first openings (44'); a plurality of optical fibres (40) extending from each of said fibre-optic ribbons (28) along said hand-knuckle region (38') and said back-of-the hand portion (26) to a light source (22) said light source being mounted near said wrist band said fibre-optic arrangement being mounted between said inside
lining (72) and said outside layer (74); being
**characterised in that** each of said ribbons (28) having a top surface affixed to said outside layer (74);
each of said ribbons (28) further having a backing piece (42) affixed thereto, and said backing piece (42) being glued to said inside lining (72); and
said plurality of optical fibres (40) being loosely laid between said inside lining (72) and said outside layer (74), and having slack means (24) therein for allowing a flexion of said fingers (30) and said thumb (32) without applying tension on said light source.

2. The illuminated glove as claimed in **claim 1**, further being **characterized in that** each of said backing piece (42) is made of reflective material, and each of said fingers (30) and thumb (32) has an aperture (110) in said outside layer (74) along said top portion (30') thereof, such that said ribbons (28) are visible through said apertures (110).

3. The illuminated glove as claimed in **claim 2**, further being **characterized in that** said outside layer (74) has a second opening (112) therein in said back-of-the-hand portion (26), and said optical fibres (40) are visible through said second opening (112).

4. The illuminated glove as claimed in **claim 3**, further being **characterized in that** said second opening (112) defines a logo.

## Patentansprüche

1. Handschuh mit einem Innenfutter (72), einer Außenschicht (74), einem Handgelenkband (34), einer Mehrzahl von Fingern (30) und einem Daumen (32), einem Handrückenteil (26), das sich von dem genannten Handgelenkband (34) zu den genannten Fingern (30) und zu dem genannten Daumen (32) hin erstreckt, einer Handknöchelregion (38'), die sich zwischen dem genannten Handrückenteil (26) und den genannten Fingern (30) und dem genannten Daumen (32) erstreckt, einer ersten Öffnung (44') in der genannten Außenschicht (74) an einem äußeren Ende der jeweiligen genannten Finger (30) und des genannten Daumens (32), und einer darin angebrachten faseroptischen Anordnung, wobei die genannte faseroptische Anordnung Folgendes umfasst: faseroptische Bänder (28), die sich entlang den jeweiligen genannten Fingern (30) und dem genannten Daumen (32) erstrecken, wobei ein Teil davon durch die genannten ersten Öffnungen (44') sichtbar ist, eine Mehrzahl von Lichtleitfassern (40), die von den jeweiligen genannten faseroptischen Bändern (28) ausgehend entlang der genannten Handknöchelregion (38') und dem genannten Handrückenteil (26) zu einer Lichtquelle (22) verlaufen, wobei die genannte Lichtquelle in der Nähe des genannten Handgelenkbands angebracht ist,
wobei die genannte faseroptische Anordnung zwischen dem genannten Innenfutter (72) und der genannten Außenschicht (74) angebracht ist, **dadurch gekennzeichnet, dass**
jedes der genannten Bänder (28) eine Oberseite hat, die an der genannten Außenschicht (74) befestigt ist,
jedes der genannten Bänder (28) forner ein daran befestigtes Unterstützungsstück (42) hat, wobei das genannte Unterstützungsstück (42) an das genannte Innenfutter (72) geklebt ist, und
die genannte Mehrzahl von Lichtleitfasern (40) lose zwischen dem genannten Innenfutter (72) und der genannten Außenschicht (74) liegt und ein Entspannungsmittel (24) beinhalten, um eine Krümmung der genannten Finger (30) und des genannten Daumens (32) zu ermöglichen, ohne dass Spannung auf die genannte Lichtquelle aufgebracht wird.

2. Beleuchtete Handschuh nach Anspruch 1, der ferner **dadurch gekennzeichnet ist, dass** jedes der genannten Unterstützungsstücke (42) aus einem reflektierenden Material gefertigt ist und jeder der genannten Finger (30) und der genannte Daumen (32) eine Lücke (110) in der genannten Außenschicht (74) entlang ihrem genannten oberen Teil (30') hat, so dass die genannten Bänder (28) durch die genannten Lücken (110) sichtbar sind.

3. Beleuchteter Handschuh nach Anspruch 2, der ferner **dadurch gekennzeichnet ist, dass** die genannte Außenschicht (74) eine zweite Öffnung (112) in dem genannten Handrückenteil (26) hat und dass die genannten Lichtleitfasern (40) durch die genannte zweite Öffnung (112) sichtbar sind.

4. Beleuchteter Handschuh nach Anspruch 3, der ferner **dadurch gekennzeichnet ist, dass** die genannte zweite Öffnung (112) ein Logo definiert.

## Revendications

1. Un gant ayant une doublure intérieure (72) ; une couche extérieure (74) ; un poignet (34) ; une pluralité de doigts (30) et un pouce (32) ; une portion dos de la main (26) s'étendant dudit poignet (34) vers lesdits doigts (30) et ledit pouce (32) ; une région articulations de la main (38') s'étendant entre ladite portion dos de la main (26) et lesdits doigts (30) et ledit pouce (32) ; une première ouverture (44') dans ladite couche extérieure (74) sur une extrémité de chacun desdits doigts (30) et dudit pouce (32) ; et un arrangement en fibres optiques monté à l'intérieur ; ledit arrangement en fibres optiques comprenant : des rubans en fibres optiques (28) s'étendant le long de chacun desdits doigts (30) et dudit pouce (32), une portion de ces rubans étant visible à travers lesdites premières ouvertures (44') ; une pluralité de fibres optiques (40) s'étendant de chacun desdits rubans en fibres optiques (28) le long de ladite région articulations de la main (38') et de ladite portion dos de la main (26) à une source lumineuse (22), ladite source lumineuse étant montée près dudit poignet,
ledit arrangement en fibres optiques étant monté entre ladite doublure intérieure (72) et ladite couche extérieure (74) ; étant **caractérisé en ce que**
chacun desdits rubans (28) a une surface supérieure apposée à ladite couche extérieure (74) ;
chacun desdits rubans (28) a encore un support (42) apposé à ces derniers, et ledit support (42) est collé à ladite doublure intérieure (72) ;
et ladite pluralité de fibres optiques (40) sont disposées sans serrer entre ladite doublure intérieure (72) et ladite couche extérieure (74), et comportent un moyen lâche (24) pour permettre une flexion desdits doigts (30) et dudit pouce (32) sans appliquer de tension sur ladite source lumineuse.

2. Le gant éclairé comme revendiqué dans la revendication 1, étant encore **caractérisé en ce que** chacun desdits supports (42) est fabriqué en matière réfléchissante, et chacun desdits doigts (30) et pouce (32) a un trou (110) dans ladite couche extérieure (74) le long de ladite portion supérieure (30') de ces derniers, de telle façon que lesdits rubans (28) soient visibles à travers lesdits trous (110).

3. Le gant éclairé comme revendiqué dans la revendication 2, étant encore **caractérisé en ce que** ladite couche extérieure (74) comporte une deuxième ouverture (112) dans ladite portion dos de la main (26), et lesdites fibres optiques (40) sont visibles à travers ladite deuxième ouverture (112).

4. Le gant éclairé comme revendiqué dans la revendication 3, étant encore **caractérisé en ce que** ladite deuxième ouverture (112) définit un logo.
